# EUROPÄISCHE PATENTSCHRIFT

(11) **EP 3 505 245 B1**
(45) Veröffentlichungstag und Bekanntmachung des Hinweises auf die Patenterteilung: **23.10.2019**
(21) Anmeldenummer: 18193817.6
(22) Anmeldetag: 19.12.2017
(51) Int. Cl.: B01J 37/02, B01J 35/00, B01J 23/63, B01D 53/94, F01N 3/10, F01N 3/035

(54) **KATALYTISCH AKTIVES PARTIKELFILTER**
CATALYTICALLY ACTIVE PARTICLE FILTER
FILTRE À PARTICULES À EFFET CATALYTIQUE ACTIF

(43) Veröffentlichungstag der Anmeldung: 03.07.2019
(62) Teilanmeldung aus: 17208613.4
(73) Patentinhaber: UMICORE AG & CO. KG, 63457 Hanau-Wolfgang (DE)
(72) Erfinder: SCHOENHABER, Jan, 64287 Darmstadt (DE); DEIBEL, Naina, 64319 Pfungstadt (DE); ROESCH, Martin, 63110 Rodgau (DE); SPIESS, Stephanie, 64289 Darmstadt (DE)

(56) Entgegenhaltungen:
- WO-A1-2017/034920
- DE-A1-102013 207 415
- DE-A1-102014 104 748
- DE-A1-102015 212 788
- US-A1- 2011 030 346
- US-A1- 2011 252 773

## Beschreibung

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren eignet.

Abgase von mit stöchiometrischem Luft/Kraftstoff-Gemisch betriebenen Verbrennungsmotoren, also Benzinmotoren, werden in herkömmlichen Verfahren mit Hilfe von Dreiwege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen.

Neben diesen gasförmigen Schadstoffen enthält das Abgas von Benzinmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren sehr klein und weisen eine durchschnittliche Partikelgröße kleiner 1 µm auf. Typische Partikelgrößen liegen im Bereich 10 bis 200 nm. Des Weiteren ist die emittierte Partikelmenge sehr gering und bewegt sich im Bereich von 2 bis 4 mg/km.

Mit der europäischen Abgasnorm EU-6c ist eine Umstellung des Grenzwertes für solche Partikel vom Partikelmassengrenzwert auf einen kritischeren Partikelzahlgrenzwert von 6 x 10¹¹/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen. Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP 1 657 410 A2 beschreibt auch bereits eine Kombination beider Beschichtungsarten, d.h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann.

Ein ähnliches Konzept verfolgt die DE 102011050788 A1. Dort enthalten die porösen Filterwände ein Katalysatormaterial eines Drei-Wege-Katalysators, während zusätzlich ein Katalysatormaterial eines Drei-Wege-Katalysators auf Teilbereiche der Filterwände aufgebracht ist.

Weitere Dokumente, die mit katalytisch aktiven Beschichtungen versehene Filtersubstrate beschreiben, sind EP 3205388 A1, EP 3207977 A1, EP 3207978 A1, EP 3207987 A1, EP 3207989 A1, EP 3207990 A1, EP 3162428 A1 und DE 102015212788 A1.

Es besteht weiter Bedarf nach katalytisch aktiven Partikelfiltern, die die Funktionalitäten eines Partikelfilters und eines Dreiwegekatalysators vereinen und dabei die künftig geltenden Grenzwerte einzuhalten erlauben. Die vorliegende Erfindung betrifft ein Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei unterschiedliche Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, wobei die Beschichtung Y sich in den Kanälen E auf den Oberflächen O_{E} befindet und sich ausgehend vom ersten Ende des Wandflussfilters über 57 bis 65 % der Länge L erstreckt und Aluminiumoxid in einer Menge von 35 bis 60 Gew.-%, bezogen auf das Gesamtgewicht der Beschichtung Y, Palladium, Rhodium, oder Palladium und Rhodium und eine Sauerstoffspeicherkomponente in einer Menge von 40 bis 50 Gew.-%, bezogen auf das Gesamtgewicht der Beschichtung Y enthält, wobei die Sauerstoffspeicherkomponente Zirkoniumoxid, Ceroxid, Lanthanoxid und Yttriumoxid umfasst, und Beschichtung Z sich in den Kanälen A auf den Oberflächen O_{A} befindet und sich ausgehend vom zweiten Ende des Wandflussfilters über 57 bis 65 % der Länge L erstreckt und Aluminiumoxid in einer Menge von 25 bis 50 Gew.-%, bezogen auf das Gesamtgewicht der Beschichtung , Palladium, Rhodium, oder Palladium und Rhodium und Sauerstoffspeicherkomponenten in einer Gesamtmenge von 50 bis 80 Gew.-%, bezogen auf das Gesamtgewicht der Beschichtung Z enthält, wobei eine Sauerstoffspeicher-komponente Zirkoniumoxid, Ceroxid, Lanthanoxid und Yttriumoxid und eine andere Zirkoniumoxid, Ceroxid, Lanthanoxid und Praseodymoxid enthält.

Die Beschichtung Z enthält in diesem Fall zum Beispiel zwei Sauerstoffspeicherkomponenten.

Die Beschichtungen Y und Z sind Dreiwege-katalytisch aktiv, insbesondere bei Betriebstemperaturen von 250 bis 1100 °C. Sie sind verschieden voneinander, beide enthalten aber ein oder mehrere Edelmetalle, die auf einem oder mehreren Trägermaterialien fixiert sind, sowie ein oder mehrere Sauerstoffspeicherkomponenten.

Die Beschichtungen Y und Z können sich hinsichtlich der enthaltenen Komponenten unterscheiden. So können sie sich beispielsweise hinsichtlich der enthaltenen Edelmetalle oder hinsichtlich der enthaltenen Sauerstoffspeicherkomponenten unterscheiden.

Sie können aber auch identische Bestandteile enthalten, diese müssen dann aber in unterschiedlichen Mengen vorliegen.

Als Edelmetalle werden Palladium, Rhodium oder Palladium und Rhodium eingesetzt, wobei Palladium und Rhodium besonders bevorzugt sind.

Bezogen auf das erfindungsgemäße Partikelfilter ist der Anteil von Rhodium am gesamten Edelmetallgehalt insbesondere größer als 10 Gew.-%.

Die Edelmetalle werden üblicherweise in Mengen von 0,15 bis 5 g/l, bezogen auf das Volumen des Wandflussfilters eingesetzt.

Die porösen Wände des erfindungsgemäßen Partikelfilters sind bevorzugt frei von Edelmetallen.

Als Trägermaterial für die Edelmetalle wird Aluminiumoxid eingesetzt insbesondere mit einer BET-Oberfläche von 30 bis 250 m²/g, bevorzugt von 100 bis 200 m²/g (bestimmt nach DIN 66132). Besonders geeignete Trägermaterialien für die Edelmetalle sind dotierte Aluminiumoxide wie beispielsweise Lanthanoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

Als Sauerstoffspeicherkomponenten werden Cer/Zirkonium/ Seltenerdmetall-Mischoxide eingesetzt. Der Begriff "Cer/Zirkonium/ Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.

Im Übrigen umfasst der Begriff Seltenerdmetall bzw. Seltenerdmetalloxid im Sinne vorliegender Erfindung kein Cer bzw. kein Ceroxid.

In Ausführungsformen der vorliegenden Erfindung sind die Sauerstoffspeicherkomponenten frei von Neodymoxid.

Erfindungsgemäß kann das Masseverhältnis von Ceroxid zu Zirkoniumoxid in den Cer/Zirkonium/Seltenerdmetall-Mischoxiden in weiten Grenzen variieren. Es beträgt beispielsweise 0,1 bis 1,5, bevorzugt 0,2 bis 1 oder 0,3 bis 0,5.

In Ausführungsformen der vorliegenden Erfindung umfasst Beschichtung Y eine Sauerstoffspeicherkomponente mit einem Gehalt an Ceroxid von 20 bis 40 Gew.-%, bezogen auf das Gewicht der Sauerstoffspeicherkomponente. In Ausführungsformen der vorliegenden Erfindung umfasst Beschichtung Z eine Sauerstoffspeicherkomponente mit einem Gehalt an Ceroxid von 30 bis 60 Gew.-%, bezogen auf das Gewicht der Sauerstoffspeicherkomponente

Die Lanthanoxid enthaltenden Sauerstoffspeicherkomponenten weisen insbesondere ein Masseverhältnis von Lanthanoxid zu Ceroxid von 0,05 bis 0,5 auf.

Üblicherweise enthalten die Beschichtungen Y und Z Sauerstoffspeicherkomponenten in Mengen von 15 bis 120 g/l, bezogen auf das Volumen des Wandflussfilters.

Das Masseverhältnis von Trägermaterialien und Sauerstoffspeicherkomponenten in den Beschichtungen Y und Z beträgt üblicherweise 0,3 bis 1,5, beispielsweise 0,4 bis 1,3.

In Ausführungsformen der vorliegenden Erfindung enthalten eine oder beide der Beschichtungen Y und Z eine Erdalkaliverbindung wie z.B. Strontiumoxid, Bariumoxid oder Bariumsulfat. Die Menge an Bariumsulfat je Beschichtung beträgt insbesondere 2 bis 20 g/l Volumen des Wandflussfilters.

Insbesondere enthält Beschichtung Z Strontiumoxid oder Bariumoxid.

In Ausführungsformen der vorliegenden Erfindung sind die Beschichtungen Y und Z verschieden voneinander, wobei aber beide Lanthan-stabilisiertes Aluminiumoxid, Palladium, Rhodium oder Palladium und Rhodium und eine Zirkoniumoxid, Ceroxid, Lanthanoxid, sowie Yttriumoxid und/oder Praseodymoxid umfassende Sauerstoffspeicherkomponente umfassen.

In Beschichtung Y ist dabei der Yttriumoxid-Gehalt insbesondere 5 bis 15 Gew.-%, bezogen auf das Gewicht der Sauerstoffspeicherkomponente. Das Gewichtsverhältnis von Lanthanoxid zu Yttriumoxid beträgt insbesondere 0.1 bis 1.

In Ausführungsformen der vorliegenden Erfindung ist der Gehalt von Yttriumoxid in der Sauerstoffspeicherkomponente der Beschichtung Z größer oder gleich dem Gehalt von Yttriumoxid in der Sauerstoffspeicherkomponente der Beschichtung Y, jeweils bezogen auf das Gewicht der jeweiligen Sauerstoffspeicherkomponente.

In Ausführungsformen der vorliegenden Erfindung ist der Massenanteil von Yttriumoxid in der Beschichtung Y größer als in der Beschichtung Z.

Beschichtung Z enthält eine zusätzliche Sauerstoffspeicherkomponente, die Zirkoniumoxid, Ceroxid, Lanthanoxid, sowie Praseodymoxid enthält.

Dabei ist der Praseodymoxid-Gehalt insbesondere 2 bis 10 Gew.-%, bezogen auf das Gewicht der Sauerstoffspeicherkomponente. Das Gewichtsverhältnis von Lanthanoxid zu Praseodymoxid beträgt insbesondere 0.1 bis 1.

In Ausführungsformen der vorliegenden Erfindung ist in Beschichtung Z der Zirkoniumoxid-Gehalt der Yttriumoxid-haltigen Sauerstoffspeicherkomponente größer als der Zirkoniumoxid-Gehalt der Praseodymoxidhaltigen Sauerstoffspeicherkomponente, jeweils bezogen auf die jeweilige Sauerstoffspeicherkomponente.

Die Beschichtungen Y und Z umfassen in Ausführungsformen jeweils Lanthan-stabilisiertes Aluminiumoxid.

In Ausführungsformen der vorliegenden Erfindung beträgt in Beschichtung Y das Gewichtsverhältnis von Aluminiumoxid zur Sauerstoffspeicherkomponente mindestens 0,7.

In Ausführungsformen der vorliegenden Erfindung beträgt in Beschichtung Z das Gewichtsverhältnis von Aluminiumoxid zur Sauerstoffspeicherkomponente mindestens 0,3.

Die Beladung des Wandflussfilters mit Beschichtung Y beträgt bevorzugt 33 bis 125 g/l, bezogen auf das Volumen des Wandflussfilters.

Die Beladung des Wandflussfilters mit Beschichtung Z beträgt bevorzugt 33 bis 125 g/l, bezogen auf das Volumen des Wandflussfilters.

Die Gesamtwashcoatbeladung des erfindungsgemäßen Partikelfilters beträgt insbesondere 40 bis 150 g/l, bezogen auf das Volumen des Wandflussfilters.

Die Summe der Längen von Beschichtung Y und Beschichtung Z beträgt 114 bis 130 % der Länge L.

In Ausführungsformen der vorliegenden Erfindung enthält weder Beschichtung Y, noch Beschichtung Z einen Zeolithen oder ein Molsieb.

Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit, haben beispielsweise eine Zelligkeit von 200 bis 400 Zellen pro : inch (25,4 mm) und üblicherweise eine Wandstärke zwischen 6 und 12 Mil, bzw. 0,1524 und 0,305 Millimeter Sie weisen in unbeschichtetem Zustand beispielsweise Porositäten von 50 bis 80, insbesondere 55 bis 75% auf. Ihre durchschnittliche Porengröße beträgt in unbeschichtetem Zustand beispielsweise 10 bis 25 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter appliziert wird. Thermische Nachbehandlung bzw. Kalzination schließen sich üblicherweise an.

Die Beschichtungen Y und Z werden in getrennten und aufeinanderfolgenden Beschichtungsschritten erhalten.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. In Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung werden die Beschichtungssuspensionen zur Herstellung der Beschichtungen Y und Z bis zu einer Partikelgrößenverteilung von d₅₀ = 4 bis 8 µm und d₉₉ = 22 bis 16 µm gemahlen.

Das erfindungsgemäße Partikelfilter eignet sich hervorragend zur Entfernung von Partikeln, Kohlenmonoxid, Kohlenwasserstoffen und Stickoxiden aus dem Abgas von mit stöchiometrischem Luft/KraftstoffGemisch betriebenen Verbrennungsmotoren.

Die vorliegende Erfindung betrifft somit auch ein Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das dadurch gekennzeichnet ist, dass das Abgas über ein erfindungsgemäßes Partikelfilter geleitet wird.

Dabei kann das Abgas so über ein erfindungsgemäßes Partikelfilter geleitet werden, dass es durch die Kanäle E in das Partikelfilter eintritt und es durch Kanäle A wieder verlässt.

Es ist aber auch möglich, dass das Abgas durch die Kanäle A in das Partikelfilter eintritt und es durch Kanäle E wieder verlässt.

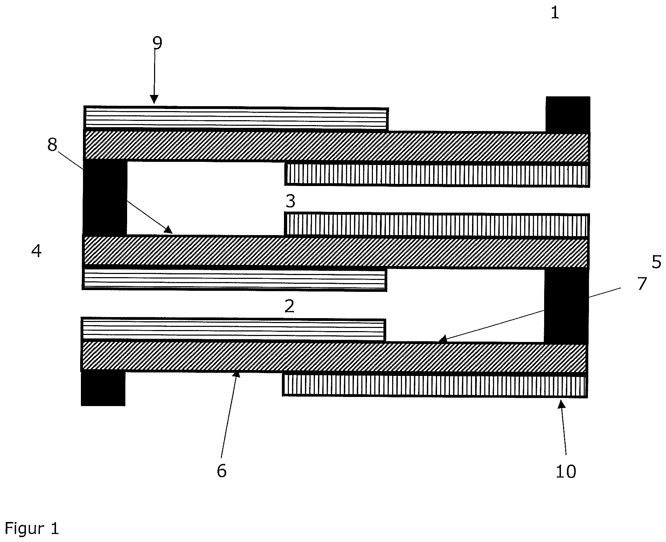

Figur 1 zeigt ein erfindungsgemäßes Partikelfilter, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen O_{E} (7) bzw. O_{A} (8) bilden und wobei die Kanäle E (2) am zweiten Ende (5) und die Kanäle A (3) am ersten Ende (4) verschlossen sind. Beschichtung Y (9) befindet sich in den Kanälen E (2) auf den Oberflächen O_{E} (7) und Beschichtung Z (10) in den Kanälen A (3) auf den Oberflächen O_{A} (8).

Die Erfindung wird in den nachstehenden Beispielen näher erläutert.

### Vergleichsbeispiel 1

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 75 g/l, die Gesamtedelmetallbeladung 1,27 g/l mit einem Verhältnis von Palladium zu Rhodium von 5 : 1. Der so erhaltene beschichtete Filter wurde getrocknet und anschließend kalziniert. Er wird nachstehend als VGPF1 bezeichnet.

### Beispiel 1

### Beschichtung der Eingangskanäle

a) Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar in den Eingangskanälen auf eine Länge von 60 % der Filterlänge. Die Beladung des Einlasskanals betrug 62,5 g/l, die Edelmetallbeladung 1,06 g/l mit einem Verhältnis von Palladium zu Rhodium von 5 : 1. Der so erhaltene beschichtete Filter wurde getrocknet und anschließend kalziniert.

### Beschichtung der Ausgangskanäle

b) Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Ausgangskanälen auf eine Länge von 60 % der Filterlänge. Die Beladung des Auslasskanals betrug 62,5 g/l, die Edelmetallbeladung 1,06 g/l mit einem Verhältnis von Palladium zu Rhodium von 5 : 1. Der so erhaltene beschichtete Filter wurde getrocknet und anschließend kalziniert. Die Gesamtbeladung dieses Filters betrug somit 75 g/l, die Gesamtedelmetallbeladung 1,27 g/l mit einem Verhältnis von Palladium zu Rhodium von 5 : 1. Er wird nachstehend als GPF1 bezeichnet.

### Katalytische Charakterisierung

Die Partikelfilter VGPF1 und GPF1 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 19 Stunden (siehe Motortechnische Zeitschrift, 1994, 55, 214-218).

Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude).

Die nachfolgende Tabelle 1 enthält die Temperaturen T₅₀, bei denen jeweils 50% der betrachteten Komponenten umgesetzt werden.

**Tabelle 1**

| | T₅₀ HC stöch | T₅₀ CO stöch | T₅₀ NOx stöch |
|---|---|---|---|
| VGPF1 | 375 | 382 | 388 |
| GPF1 | 363 | 367 | 368 |

Das dynamische Umsatzverhalten der Partikelfilter im lambda Sweeptest wurde in einem Bereich von A = 0,99 - 1,01 bei einer konstanten Temperatur von 510°C bestimmt. Die Amplitude von λ betrug dabei ±3,4%. Tabelle 2 enthält den Umsatz am Schnittpunkt der CO- und der NOx-Umsatzkurven, sowie den zugehörigen HC-Umsatz der gealterten Partikelfilter.

**Tabelle 2**

| | CO/NOx Umsatz am Kreuzungspunkt | HC Umsatz am λ des CO/NOx Kreuzungspunktes |
|---|---|---|
| VGPF1 | 84% | 96% |
| GPF1 | 96% | 97% |

Der erfindungsgemäße Partikelfilter GPF1 zeigt gegenüber VGPF1 im gealterten Zustand eine deutliche Verbesserung beim Anspringverhalten und beim dynamischen CO/NOx-Umsatz.

### Vergleichsbeispiel 2:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicher-komponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfilter-substrats eingesetzt, wobei die Beschichtung über 100% der Substratlänge in die poröse Filterwand eingebracht wurde. Die Gesamtbeladung dieses Filters betrug 100 g/l, die Edelmetallbeladung 2,60 g/l mit einem Verhältnis von Palladium zu Rhodium von 60 : 13,75. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 40 Gew.-% Ceroxid, Zirkonoxid, Lanthanoxid und Praseodymoxid umfasste, in Wasser suspendiert. Das Gewichtsverhältnis von Aluminiumoxid und Sauerstoffspeicherkomponente betrug 50/50. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 25 % der Filterlänge. Die Beladung des Eingangskanals betrug 58 g/l, die Edelmetallbeladung 2,30 g/l mit einem Verhältnis von Palladium zu Rhodium von 10 : 3. Der so erhaltene beschichtete Filter wurde getrocknet und anschließend kalziniert.

### c) Beschichtung der Ausgangskanäle

Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56/44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter b) erhaltenen Wandflussfiltersubstrats eingesetzt, wobei auf die Filterwände des Substrats beschichtet wurde und zwar in den Ausgangskanälen auf eine Länge von 25 % der Filterlänge. Die Beladung des Auslasskanals betrug 59 g/l, die Edelmetallbeladung 1,06 g/l mit einem Verhältnis von Palladium zu Rhodium von 1 : 2. Der so erhaltene beschichtete Filter wurde getrocknet und anschließend kalziniert.

Die Gesamtbeladung dieses Filters betrug somit 130 g/l, die Gesamtedelmetallbeladung 3,44 g/l mit einem Verhältnis von Palladium zu Rhodium von 10 : 3. Er wird nachstehend als VGPF2 bezeichnet.

### Vergleichsbeispiel 3:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 100 g/l, die Edelmetallbeladung 2,07 g/l mit einem Verhältnis von Palladium zu Rhodium von 45 : 13,5. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 40 Gew.-% Ceroxid, Zirkonoxid, Lanthanoxid und Praseodymoxid umfasste, in Wasser suspendiert. Das Gewichtsverhältnis von Aluminiumoxid und Sauerstoffspeicherkomponente betrug 50/50. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 60 % der Filterlänge. Die Beladung des Eingangskanals betrug 90 g/l, die Edelmetallbeladung 2,30 g/l mit einem Verhältnis von Palladium zu Rhodium von 10 : 3. Der so erhaltene beschichtete Filter wurde getrocknet und anschließend kalziniert. Die Gesamtbeladung dieses Filters betrug somit 154 g/l, die Gesamtedelmetallbeladung 3,44 g/l mit einem Verhältnis von Palladium zu Rhodium von 10 : 3. Er wird nachstehend als VGPF3 bezeichnet.

### Beispiel 2

### Beschichtung der Eingangskanäle

a) Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56/44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfilter-substrats eingesetzt. Dabei wurde die Beschichtungssuspension auf die Filterwände des Substrats beschichtet und zwar in den Eingangskanälen auf eine Länge von 60 % der Filterlänge. Die Beladung des Einlasskanals betrug 83.33 g/l, die Edelmetallbeladung 2,87 g/l mit einem Verhältnis von Palladium zu Rhodium von 10 : 3. Der so erhaltene beschichtete Filter wurde getrocknet und anschließend kalziniert.

### Beschichtung der Ausgangskanäle

b) Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Ausgangskanälen auf eine Länge von 60 % der Filterlänge. Die Beladung des Auslasskanals betrug 83.33 g/l, die Edelmetallbeladung 2,87 g/l mit einem Verhältnis von Palladium zu Rhodium von 10 : 3. Der so erhaltene beschichtete Filter wurde getrocknet und anschließend kalziniert. Die Gesamtbeladung dieses Filters betrug somit 100 g/l, die Gesamtedelmetallbeladung 3,44 g/l mit einem Verhältnis von Palladium zu Rhodium von 10 : 3. Er wird nachstehend als GPF2 bezeichnet.

### Katalytische Charakterisierung

Die Partikelfilter VGPF2, VGPF3 und GPF2 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 76 Stunden (siehe Motortechnische Zeitschrift, 1994, 55, 214-218).

Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl A bestimmt (λ =0,999 mit ±3,4% Amplitude).

Die nachfolgende Tabelle 3 enthält die Temperaturen T₅₀, bei denen jeweils 50% der betrachteten Komponenten umgesetzt werden.

**Tabelle 3**

| | T₅₀ HC stöch | T₅₀ CO stöch | T₅₀ NOx stöch |
|---|---|---|---|
| VGPF2 | 368 | 374 | 371 |
| VGPF3 | 387 | 395 | 396 |
| GPF2 | 332 | 335 | 332 |

Das dynamische Umsatzverhalten der Partikelfilter im lambda Sweeptest wurde in einem Bereich von λ = 0,99 - 1,01 bei einer konstanten Temperatur von 510°C bestimmt. Die Amplitude von λ betrug dabei ±3,4%. Tabelle 4 enthält den Umsatz am Schnittpunkt der CO- und der NOx-Umsatzkurven, sowie den zugehörigen HC-Umsatz der gealterten Partikelfilter.

**Tabelle 4**

| | CO/NOx Umsatz am Kreuzungspunkt | HC Umsatz am λ des CO/NOx Kreuzungspunktes |
|---|---|---|
| VGPF2 | 92 | 97 |
| VGPF3 | 93 | 97 |
| GPF2 | 98 | 98 |

Der erfindungsgemäße Partikelfilter GPF2 zeigt gegenüber VGPF2 und VGPF3 im gealterten Zustand eine deutliche Verbesserung beim Anspringverhalten und beim dynamischen CO/NOx-Umsatz.

## Patentansprüche

1. Partikelfilter, das ein Wandflussfilter der Länge L und zwei unterschiedliche Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, **dadurch gekennzeichnet, dass**
Beschichtung Y sich in den Kanälen E auf den Oberflächen O_{E} befindet und sich ausgehend vom ersten Ende des Wandflussfilters über 57 bis 65 % der Länge L erstreckt und Aluminiumoxid in einer Menge von 35 bis 60 Gew.-%, bezogen auf das Gesamtgewicht der Beschichtung Y, Palladium, Rhodium oder Palladium und Rhodium und eine Sauerstoffspeicherkomponente in einer Menge von 40 bis 50 Gew.-%, bezogen auf das Gesamtgewicht der Beschichtung Y enthält, wobei die Sauerstoffspeicherkomponente Zirkoniumoxid, Ceroxid, Lanthanoxid und Yttriumoxid umfasst, und Beschichtung Z sich in den Kanälen A auf den Oberflächen O_{A} befindet und sich ausgehend vom zweiten Ende des Wandflussfilters über 57 bis 65 % der Länge L erstreckt und Aluminiumoxid in einer Menge von 25 bis 50 Gew.-%, bezogen auf das Gesamtgewicht der Beschichtung, Palladium, Rhodium oder Palladium und Rhodium und Sauerstoffspeicherkomponenten in einer Gesamtmenge von 50 bis 80 Gew.-%, bezogen auf das Gesamtgewicht der Beschichtung Z enthält, wobei eine Sauerstoffspeicherkomponente Zirkoniumoxid, Ceroxid, Lanthanoxid und Yttriumoxid und eine andere Zirkoniumoxid, Ceroxid, Lanthanoxid und Praseodymoxid enthält.

2. Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, **dadurch gekennzeichnet, dass** das Abgas über einen Partikelfilter gemäß Anspruch 1 geleitet wird.

## Claims

1. Particle filter comprising a wall-flow filter of length L and two different coatings Y and Z, wherein the wall-flow filter comprises channels E and A which extend in parallel between a first end and a second end of the wall-flow filter and which are separated by porous walls forming surfaces O_{E} or O_{A}, and wherein the channels E at the second end and the channels A at the first end are closed, **characterized in that**
coating Y is located in the channels E on the surfaces O_{E} and extends from the first end of the wall-flow filter over 57 to 65% of the length L and contains aluminum oxide in an amount of 35 to 60 wt% relative to the total weight of the coating Y; palladium, rhodium, or palladium and rhodium; and an oxygen storage component in an amount of 40 to 50 wt% relative to the total weight of the coating Y, wherein the oxygen storage component comprises zirconium oxide, cerium oxide, lanthanum oxide, and yttrium oxide; and that coating Z is located in the channels A on the surfaces O_{A} and extends from the second end of the wall-flow filter over 57 to 65% of the length L and contains aluminum oxide in an amount of 25 to 50 wt% relative to the total weight of the coating; palladium, rhodium, or palladium and rhodium; and oxygen storage components in a total amount of from 50 to 80 wt% relative to the total weight of the coating Z, wherein one oxygen storage component contains zirconium oxide, cerium oxide, lanthanum oxide, and yttrium oxide, and another contains zirconium oxide, cerium oxide, lanthanum oxide, and praseodymium oxide.

2. Method for removing particles, carbon monoxide, hydrocarbons, and nitrogen oxides from the exhaust gas of internal combustion engines operated with a stoichiometric air/fuel mixture, **characterized in that** the exhaust gas is conducted over a particle filter according to claim 1.

## Revendications

1. Filtre à particules qui comprend un filtre à parois filtrantes de longueur L et deux revêtements différents Y et Z, le filtre à parois filtrantes comprenant des canaux E et A qui s'étendent en parallèle entre une première et une deuxième extrémité du filtre à parois filtrantes et qui sont séparés par des parois poreuses, qui forment des surfaces O_{E} ou O_{A} et les canaux E étant fermés au niveau de la deuxième extrémité et les canaux A étant fermés au niveau de la première extrémité, **caractérisé en ce que**
le revêtement Y se trouve dans les canaux E sur les surfaces O_{E} et s'étend, partant de la première extrémité du filtre à parois filtrantes, sur 57 à 65 % de la longueur L et comprend de l'oxyde d'aluminium en une quantité de 35 à 60 % en poids, par rapport au poids total du revêtement Y, du palladium, du rhodium ou du palladium et du rhodium et un composant d'accumulation d'oxygène en une quantité de 40 à 50 % en poids, par rapport au poids total du revêtement Y, le composant d'accumulation d'oxygène comprenant de l'oxyde de zirconium, de l'oxyde de cérium, de l'oxyde de lanthane et de l'oxyde d'yttrium et le revêtement Z se trouve dans les canaux A sur les surfaces O_{A} et s'étend, partant de la deuxième extrémité du filtre à parois filtrantes, sur 57 à 65 % de la longueur L et contient de l'oxyde d'aluminium en une quantité de 25 à 50 % en poids, par rapport au poids total du revêtement, du palladium, du rhodium ou du palladium et du rhodium et des composants d'accumulation d'oxygène en une quantité totale de 50 à 80 % en poids, par rapport au poids total du revêtement Z, un composant d'accumulation d'oxygène contenant de l'oxyde de zirconium, de l'oxyde de cérium, de l'oxyde de lanthane et de l'oxyde d'yttrium et un autre contenant de l'oxyde de zirconium, de l'oxyde de cérium, de l'oxyde de lanthane et de l'oxyde de praséodyme.

2. Procédé d'élimination de particules, de monoxyde de carbone, d'hydrocarbures et d'oxydes d'azote du gaz d'échappement de moteurs à combustion interne fonctionnant avec un mélange stoechiométrique air/carburant, **caractérisé en ce que** le gaz d'échappement est guidé sur un filtre à particules selon la revendication 1.
